# EUROPÄISCHE PATENTSCHRIFT

(11) **EP 3 681 941 B1**
(45) Veröffentlichungstag und Bekanntmachung des Hinweises auf die Patenterteilung: **06.10.2021**
(21) Anmeldenummer: 18758894.2
(22) Anmeldetag: 30.08.2018
(51) Int. Cl.: C08J 9/40, B29C 44/56, C08G 12/32, C08L 61/28

(54) **MIT SCHICHTSILIKAT IMPRÄGNIERTER MELAMIN/FORMALDEHYD-SCHAUMSTOFF**
MELAMINE/FORMALDEHYDE FOAM IMPREGNATED WITH PHYLLOSILICATE
MOUSSE EN MÉLAMINE-FORMALDÉHYDE IMPRÉGNÉE DE PHYLLOSILICATE

(30) Priorität: 12.09.2017 EP 17190519
(43) Veröffentlichungstag der Anmeldung: 22.07.2020
(73) Patentinhaber: BASF SE, 67056 Ludwigshafen am Rhein (DE)
(72) Erfinder: WEISSE, Sebastian Alexander, 67056 Ludwigshafen (DE); STEINKE, Tobias Heinz, 67056 Ludwigshafen (DE); VATH, Bernhard, 67056 Ludwigshafen (DE); LENZ, Werner, 67056 Ludwigshafen (DE)
(74) Vertreter: BASF IP Association
(86) Internationale Anmeldenummer: PCT/EP2018/073333
(87) Internationale Veröffentlichungsnummer: WO 2019/052825

(56) Entgegenhaltungen:
- EP-A2- 0 332 928

## Beschreibung

Die Erfindung betrifft einen mit Schichtsilikat imprägnierten Melamin/Formaldehyd-Schaumstoff, Verfahren zu seiner Herstellung und seine Verwendung.

Die Herstellung brandhemmender offenzelliger Melamin/Formaldehyd-Schaumstoffe, die anorganische Füllmaterialien enthalten, ist aus dem Stand der Technik bekannt.

WO 2007/023118 betrifft einen Schaumstoff aus einer Schaumstoffmatrix mit im Wesentlichen offenen Zellen und mit einer auf die Schaumstoffmatrix aufgetragenen Imprägnierung aus im Wesentlichen Fluorcarbonharz und/oder Silikonharz, wobei die Imprägnierung zusätzlich mindestens eine flammhemmende Substanz enthält. Die flammhemmende Substanz ist vorzugsweise Natriumsilikat (Wasserglas), das in Form eines 30 Gew.-%igen natriumsilikathaltigen Klebstoffs eingesetzt wird.

WO 2012/059493 betrifft Melamin/Formaldehyd-Schaumstoffe, die 80 bis 98 Gew.-% eines anorganischen Füllmaterials enthalten. Als anorganische Füllmaterialien werden unterschiedliche teilchenförmige Materialien genannt, unter anderem Schichtsilikate. Die anorganischen Füllmaterialien können unbeschichtet oder beschichtet eingesetzt werden. Die Herstellung erfolgt durch Verschäumen und Trocken von Melamin/Formaldehyd-Vorkondensaten in einem Lösungsmittel mit einer Säure, einem Dispergiermittel, einem Treibmittel und dem anorganischen Füllmaterial. Auf diese Weise sind die anorganischen Füllmaterialien in die Porenstruktur des Schaumstoffs eingebettet und füllen diese aus, d.h. der mittlere Teilchendurchmesser der anorganischen Füllmaterialien entspricht dem mittleren Porendurchmesser der Schaumstruktur.

JP-A-2003022076 betrifft flammhemmende akustische Materialien auf Basis eines Melaminharzes. Auf den Melaminharzschaum ist eine Oberflächenschicht auf Basis von anorganischen Hydraten von Borax oder Natriumsilikat aufgebracht. Die Schaumstoffe zeigen gute Schallabsorptionseigenschaften in Kombination mit verbessertem Brandverhalten.

EP 0 332 928 A2 betrifft Brandschutzelemente aus Schaumstoffkörpern, die eine flüssige, Feuerwidrigkeit vermittelnde Imprägnierung enthalten. Bei dem offenzelligen Schaumstoff kann es sich unter anderem um einen Meiamin/Formaldehyd-Schaumstoff handeln. Als Bindemittel der Imprägnierung können unter anderem Polyurethane eingesetzt werden, und als feuerwidrige Additive können Glimmer oder Vermiculite eingesetzt werden.

Die bekannten flammgeschützten Melamin/Formaldehyd-Schaumstoffe weisen bei einer Ausrüstung mit Natriumsilikat (Wasserglas) häufig eine geringe Bruchfestigkeit auf, so dass sich bei mechanischer Beanspruchung die Wasserglas-Imprägnierung leicht vom Schaumstoff löst und unter Staubbildung von ihm abgetrennt wird.

Ferner zeigen nicht alle Melamin/Formaldehyd-Schaumstoffe ein ausreichendes Brandschutzverhalten. Insbesondere im Schiffsbau müssen Isolationsmaterialien, die für den Bau von Trennflächen verwendet werden, das Prüfkriterium "Nichtbrennbarkeit" laut Richtlinien der International Maritime Organisation (IMO) erfüllen. Die Durchführung der Nichtbrennbarkeitsprüfung und Klassifizierung erfolgt nach den "International Codes for Application of Fire Test Procedures (FTPC): IMO 2010 FTP Code Teil 1 (Resolution MSC.307(88)). In diesem Ofentest nach DIN EN ISO 1182 dürfen die untersuchten Schäume nicht mehr als 50 Gew.-% ihres Gewichts beim Verbrennen einbüßen. Zudem dürfen die Ofentemperatur und die Oberflächentemperatur des Prüfkörpers nicht um mehr als 30°C ansteigen, und die Flammdauer muss unter 10 Sekunden liegen. Diese Kriterien werden nicht mit Standard-Melamin/Formaldehyd-Schaumstoffen erfüllt.

Aufgabe der vorliegenden Erfindung ist die Bereitstellung flammgeschützter Melamin/Formaldehyd-Schaumstoffe, die die Nachteile der bekannten Schaumstoffe vermeiden und gute mechanische Eigenschaften mit einem vorteilhaften Brandverhalten kombinieren. Insbesondere soll die Brandschutzausrüstung so gut am Schaumstoff anhaften, dass auch bei mechanischer Beanspruchung kein Ablösen und Austreten der Brandschutzausrüstung aus dem Schaumstoff auftritt. Zudem sollte insbesondere bevorzugt der Brandtest IMO 2010 FTP Code 1 bestanden werden.

Die Aufgabe wird erfindungsgemäß gelöst durch einen Melamin/Formaldehyd-Schaumstoff mit offenzelligem Schaumstoffgerüst, mit einer auf das Schaumstoffgerüst aufgebrachten Imprägnierung, enthaltend mindestens ein mit Aminosilan oberflächenmodifiziertes teilchenförmiges Schichtsilikat und mindestens eine Polyurethandispersion, die anionisch und/oder nichtionisch stabilisiert ist, wobei die durch die Imprägnierung aufgebrachten Substanzen getrocknet sein können.

Ein bevorzugter Schaumstoff zeichnet sich dadurch aus, dass seine äußere Oberfläche zumindest teilweise mit flächigen, nicht brennbaren Materialien, vorzugsweise Glasfaservliesen, Mineralfaservliesen, Glasfasergeweben, Mineralfasergeweben oder Metallfolien wie Aluminiumfolie kaschiert ist.

Es wurde erfindungsgemäß gefunden, dass eine Imprägnierung eines Melamin/Formaldehyd-Schaumstoffs sowohl zu einer ausreichenden mechanischen Stabilität des imprägnierten Schaumstoffs führt, als auch das Bestehen des Brandtests nach IMO 2010 FTP Code 1 erlaubt, wenn ein spezielles teilchenförmiges Schichtsilikat mit einer speziellen Polyurethandispersion als Bindemittel kombiniert wird.

Der Ausdruck "Imprägnierung" beschreibt die auf das Schaumstoffgerüst aufgebrachten Stoffe, vorliegend das aufgebrachte Schichtsilikat und die aufgebrachte Polyurethandispersion sowie gegebenenfalls aufgebrachte Dispergierhilfsmittel und Hydrophobierungs-/Oleophobierungsmittel. Der Ausdruck "Imprägnierung" umfasst auch die getrockneten aufgebrachten Substanzen.

Die Aufgabe wird zudem erfindungsgemäß gelöst durch ein Verfahren zur Herstellung eines derartigen Melamin/Formaldehyd-Schaumstoffs, umfassend die folgenden Schritte:
(a) Mischen des mindestens einen mit Aminosilan oberflächenmodifiziertes teilchenförmiges Schichtsilikats mit der mindestens einen Polyurethandispersion, die anionische und/oder nichtionisch stabilisiert ist,
(b) Aufbringen der Mischung aus Schritt (a) auf den Schaumstoff,
(c) gegebenenfalls nachfolgendes Pressen des Schaumstoffes, um die Mischung in die Poren des Schaumstoffs einzubringen,
(d) Trocknen des Schaumstoffes.

Die Aufgabe wird ferner gelöst durch die Verwendung derartiger Melamin/Formaldehyd-Schaumstoffe zur Wärme- und Schalldämmung im Bauwesen, im Automobil-, Schiffs- und Maschinen-, Luft- und Raumfahrzeugbau.

Erfindungsgemäß wird ein mit Aminosilan oberflächenmodifiziertes teilchenförmiges Schichtsilikat zur Imprägnierung des Melamin/Formaldehyd-Schaumstoffs eingesetzt.

Geeignete Schichtsilikate sind Silikate, deren Silikatanionen aus Schichten eckenverknüpfter SiO₄-Tetraeder bestehen. Diese Schichten oder Doppelschichten sind untereinander nicht über weitere Si-Verbindungen zu Gerüsten verknüpft.

Geeignete Schichtsilikate sind dem Fachmann bekannt. Bevorzugt sind die Schichtsilikate, Montmorillonit (Smectit) (Al,Mg,Fe)₂[(OH)₂[(Si,Al)₄O₁₀] Na_{0,33}(H₂O)₄, Vermiculit Mg₂(Al,Fe,Mg)[(OH)₂|(Si,Al)₄O₁₀] • Mg_{0,35}(H₂O)₄, Allophan Al₂[SiO₅]₆O₃ • n H₂O, Kaolinit Al₄[(OH)₈|Si₄O₁₀], Halloysit Al₄[(OH)₈|Si₄O₁₀] • 2 H₂O, Mullit Al₈[(O,OH,F)|(Si,Al)O₄]₄, Talkum Mg₃Si₄ O₁₀(OH)₂. Besonders bevorzugt wird Kaolinit als Schichtsilikat eingesetzt.

Die Schichtsilikate haben vorzugsweise einen mittleren Teilchendurchmesser im Bereich von 0,2 bis 10 µm, besonders bevorzugt 0,5 bis 5 µm, insbesondere 1 bis 2 µm. Der mittlere Teilchendurchmesser ist dabei das Z-Mittel, bestimmt mittels Lichtstreuung, Malvern, Fraunhofer-Beugung.

Die erfindungsgemäß angesetzten teilchenförmigen Schichtsilikate sind mit Aminosilan oberflächenmodifiziert. Hierdurch wird die Dispergierbarkeit in der Polyurethandispersion, die als Bindemittel verwendet wird, verbessert. Zudem erlaubt die Aminosilan-Oberflächenmodifizierung die chemische Anbindung an das Polyurethan-Bindemittel beziehungsweise den Melamin-Formaldehyd-Schaumstoff.

Zur Oberflächenmodifizierung könnten dabei beliebige Aminosilane eingesetzt werden. Geeignete Silanverbindungen sind insbesondere solche der allgemeinen Formel

(X-(CH₂)ₙ)ₖ-Si-(O-CₘH₂ₘ₊₁)₄₋ₖ

in der die Substituenten folgende Bedeutung haben:
X NH₂₋
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1.

Beispiele geeigneter Aminosilane sind Bis(3-triethoxysilylpropyl)amin, 3-Aminopropylmethyldiethoxysilan, 3-Aminopropyltrimethoxysilan. Typische Aminosilane weisen damit einen C₂₋₆-Alkyl-aminrest am Siliciumatom des Silanrestes auf. Die Menge an Aminosilan zur Oberflächenmodifizierung kann dabei nach den jeweiligen Erfordernissen frei gewählt werden.

Bevorzugte Silanverbindungen sind Aminopropyltrimethoxysilan, Aminobutyltrimethoxysilan, Aminopropyltriethoxysilan, Aminobutyltriethoxysilan. Die Silanverbindungen werden im Allgemeinen in Mengen von 0,05 bis 5, vorzugsweise 0,1 bis 1,5 und insbesondere 0,2 bis 0,5 Gew.-% (bezogen auf das Schichtsilikat) zur Oberflächenbeschichtung eingesetzt.

Geeignete mit Aminosilan oberflächenmodifizierte teilchenförmige Schichtsilikate sind kommerziell erhältlich, beispielsweise unter der Bezeichnung Translink® 445 von BASF SE.

Ein erfindungsgemäß bevorzugtes geeignetes oberflächenmodifiziertes teilchenförmiges Schichtsilikat ist Translink® 445 von BASF SE. Hierbei handelt es sich um ein mit Aminosilan oberflächenmodifiziertes Kaolin mit einer mittleren Teilchengröße, bezogen auf die Teilchenlänge, von etwa 1,4 µm.

Das mindestens eine mit Aminosilan oberflächenmodifizierte teilchenförmige Schichtsilikat wird in einer Menge von 50 bis 350, vorzugsweise 75 bis 300, insbesondere 100 bis 250 Gewichtsteilen, bezogen auf 100 Gewichtsteile nicht imprägnierten Melamin/Formaldehyd-Schaumstoff, auf das Schaumstoffgerüst aufgebracht.

Die Polyurethandispersion, die als Bindemittel für die teilchenförmigen Schichtsilikate eingesetzt wird, ist anionisch und/oder nichtionisch stabilisiert. Damit ist die Polyurethandispersion mit Polykationen kompatibel. Geeignete Polyurethandispersionen sind bevorzugt mit Sulfonaten oder Carboxylaten stabilisiert, die Alkalimetall- oder Ammonium-Gegenionen aufweisen. Geeignete Polyurethandispersionen sind dem Fachmann bekannt. Diese Polyurethandispersionen sind in der Regel wässrig.

Bevorzugt ist die mindestens eine Polyurethandispersion eine wässrige Dispersion eines Carbodiimid-Struktureinheiten der Formel -N=C=N- aufweisenden Polyurethans. Besonders bevorzugt sind dabei die Carbodiimid-Struktureinheiten der Formel -N=C=N- über Tetramethylxylylendiisocyanat (TMXDI) in das Polyurethan eingeführt.

Der Gehalt an Carbodiimid-Struktureinheiten der Formel -N=C=N-, bezogen auf das Polyurethan beträgt vorzugsweise 5 bis 200 ml/kg.

Geeignete wässrige Polyurethandispersionen sind beispielsweise in DE-A-197 33 044 beschrieben.

Besonders einfach lassen sich die Carbodiimid-Struktureinheiten in die wässrige Polyurethandispersion einbauen, indem man beim Aufbau der Polyurethane die Isocyanate der allgemeinen Formel OCN-(R-N=C-N)ₘ-R-NCO einsetzt, wobei R für einen zweiwertigen, gegebenenfalls Urethan-, Ester- und/oder Ethergruppen aufweisenden Kohlenwasserstoffrest, wie er durch Entfernung der Isocyanatgruppen aus einem einfachen organischen Isocyanat oder einem Urethangruppen und gegebenenfalls Ether- oder Estergruppen aufweisenden Präpolymer, das endständig Isocyanatgruppen trägt, erhalten wird, wobei bei Vorliegen von mehreren Resten R im gleichen Molekül gleichzeitig auch unterschiedliche, der genannten Definition entsprechende Reste R vorliegen können, und m für eine ganze Zahl oder (im statistischen Mittel) gebrochene Zahl von 1 bis 10, vorzugsweise von 1 bis 4, steht.

Bevorzugt leiten sich die Reste R durch Abstraktion der Isocyanatgruppen von Monomeren ab, bei denen es sich um die Diisocyanate handelt, die üblicherweise in der Polyurethanchemie eingesetzt werden.

Geeignete Monomere sind in DE-A-197 33 044 auf Seite 2, Zeilen 48 bis 67 genannt.

Die erfindungsgemäß eingesetzten Polyurethandispersionen enthalten die Carbodiimid-Struktureinheiten besonders bevorzugt in Mengen von 5 bis 150 mmol/kg Polyurethan, ganz besonders bevorzugt in Mengen von 100 bis 100 mmol/kg Polyurethan.

Die erfindungsgemäß eingesetzte Polyurethandispersion hat vorzugsweise einen Feststoffgehalt von 10 bis 75 Gew.-%, besonders bevorzugt von 20 bis 65 Gew.-%, und eine Viskosität von 10 bis 500 Pas. Insbesondere handelt es sich um wässrige Dispersionen.

Beispiele geeigneter Polyurethandispersionen sind in den Beispielen 1 und 2 der DE-A-197 33 044 beschrieben.

Die wässrigen Dispersionen können z.B. aufgebaut sein aus:
a) Diisocyanaten, die
   a1) Carbodiimid-Struktureinheiten der Formel -N=C=N- enthalten und gegebenenfalls solche,
   a2) die frei sind von Struktureinheiten der Formel -N=C=N-,
b) Diolen, von denen
   b1) 10 bis 100 mol-%, bezogen auf die Gesamtmenge der Diole (b), ein Molekulargewicht von 500 bis 5000 aufweisen, und
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Bei den Diolen (b) handelt es sich vorzugsweise um Polyesterole.

Die anionische und/oder nichtionische Stabilisierung der Polyurethandispersion bewirkt, dass die Polyurethandispersion mit Polykationen kompatibel ist.

Die anionische und/oder nichtionische Stabilisierung wird dabei vorzugsweise erreicht durch Zusatz von Carboxylaten oder Sulfonaten mit Ammonium- oder Alkalimetallgegenionen zu den PU-Dispersionen in einer zur Stabilisierung ausreichenden Menge.

Beispiele geeigneter Polyurethanemulsionen sind Emuldur® A-Typen der BASF SE, z.B. Emuldur® 360A. Hierbei handelt es sich um eine Dispersion eines Polyurethans, das Carbodiimid-Gruppen enthalt, wie es in DE-A-197 33 044 beschrieben ist. Das Polyurethan enthält TMXDI-Gruppen.

Weitere geeignete Polyurethandispersionen sind Emuldur® 381 A, Astacin® Finish PUM TF und Astacin® Finish PUMN TF von BASF SE. Hierbei handelt es sich um anionische aliphatische Polyurethan-Dispersionen.

Eine weitere geeignete Dispersion ist Impranil® DLV/1 von Covestro. Hierbei handelt es sich um eine anionische aliphatische Polycarbonatesterpolyetherpolyurethan-Dispersion.

Alle vorstehenden Dispersionen werden typischerweise in einer Feststoffkonzentration von etwa 40 Gew.-% eingesetzt.

Die mindestens eine Polyurethandispersion wird vorzugsweise in einer Menge von 0,5 bis 10 Gew.-%, besonders bevorzugt 1 bis 5 Gew.-%, insbesondere 2 bis 4 Gew.-%, bezogen auf die Trockenmasse der Imprägnierung, eingesetzt. Damit bezieht sich die Mengenangabe auf die Summe der Feststoffgehalte an oberflächenmodifiziertem teilchenförmigen Schichtsilikat und Polyurethandispersion.

Gemäß einer Ausführungsform der Erfindung ist es zudem vorteilhaft, ein Dispergierhilfsmittel mit zu verwenden. Beispielsweise kann Talkum als Dispergierhilfsmittel eingesetzt werden. Talkum kann, bezogen auf die Menge an mit Aminosilan oberflächenmodifiziertem teilchenförmigen Schichtsilikat, vorzugsweise in einer Menge von 1 bis 20 Gew.-%, besonders bevorzugt 5 bis 15 Gew.-%, insbesondere 7,5 bis 12,5 Gew.-% mitverwendet werden.

In einer weitern Ausführungsform besteht die Möglichkeit Fluorcarbonharze oder Silikonharze mit zu verwenden, um den Schaumstoff hydrophob und/oder oleophob auszurüsten. Somit wird vermieden, dass sich der Schaumstoff mit flüssigem Wasser bzw. Öl vollsaugt. In den handelsüblichen Imprägniermitteln liegt das Fluorcarbon- oder Silikonharz vorzugsweise in Form emulgierter Tröpfchen in Wasser oder leicht flüchtigen organischen Lösungsmitteln, z.B. Methanol, Ethanol, Aceton oder Pentan, vor. Aus Gründen der Nichtbrennbarkeit und der Arbeitssicherheit ist Wasser als Emulgiermittel bevorzugt.

Ein geeignetes Imprägniermittel ist Tegosivin HE 328 von Evonik. Tegosivin HE 328 ist eine lösemittelfreie, wässerige Emulsion auf Basis modifizierter reaktiver Siloxane und Silane. Ein geeignetes Imprägniermittel auf Basis von Fluorcarbonharzen ist Lefasol VO 37/2 von Lefatex Chemie GmbH. Das Imprägniermittel kann, bezogen auf die Menge an mit Aminosilan oberflächenmodifiziertem teilchenförmigen Schichtsilikat, vorzugsweise in einer Menge von 0,1 bis 10 Gew.-%, besonders bevorzugt 0,5 bis 5 Gew.-%, insbesondere 0,75 bis 2,5 Gew.-% mitverwendet werden.

Das mindestens eine mit Aminosilan oberflächenmodifiziertem teilchenförmigen Schichtsilikat und die mindestens eine Polyurethandispersion, die anionisch und/oder nichtionisch stabilisiert ist sowie gegebenenfalls das Dispergierhilfsmittel und das Hydrophobierungs- / Oleophobierungsmittel, werden auf das Schaumstoffgerüst eines Melamin/Formaldehyd-Schaumstoffs mit offenzelligem Schaumstoffgerüst aufgebracht.

Erfindungsgemäß geeignete Melamin/Formaldehyd-Schaumstoffe sind beispielsweise in WO 2007/023118, EP-B-0 071 672 und WO 2012/059493 beschrieben.

Geeignete Schaumstoffe im Rahmen der vorliegenden Erfindung sind solche, bei denen die Schaumstoffmatrix aus einem Melamin/Formaldehyd-Polykondensat aufgebaut ist. Bei einem besonders bevorzugten Melamin/Formaldehyd-Polykondensat beträgt das Molverhältnis von Formaldehyd zu Melamin 5:1 bis 1,3:1, bevorzugt 3,5:1 bis 1,5:1.

Solche Melamin/Formaldehyd-Schaumstoffe sind zum Beispiel aus EP-B 0 071 672 bekannt und von BASF SE unter dem Handelsnamen Basotect® kommerziell erhältlich. Demnach werden die offenzelligen Schaumstoffe hergestellt durch Verschäumen einer wässrigen Lösung eines Melamin/Formaldehyd Kondensationsproduktes, wobei die Lösung einen Emulgator, ein saures Härtungsmittel und ein Treibmittel, vorzugsweise einen C₅- bis C₇-Kohlenwasserstoff, enthält. Anschließend wird das Melamin/Formaldehyd-Kondensat bei erhöhter Temperatur ausgehärtet. Als offenzellige Schäume werden solche bezeichnet, bei denen das Schaumgerüst im Wesentlichen aus einer Vielzahl miteinander verbundener, dreidimensional verzweigter Zellstege besteht. Die Rohdichte des offenzelligen Schaumstoffes liegt in der Regel im Bereich von 4 bis 12 g/l, bevorzugt im Bereich von 5 bis 7 g/l. Die Porengröße beträgt 10 bis 1000 µm, bevorzugt 50 bis 300 µm.

Die Porengröße kann beispielsweise der zahlengemittelte d₅₀-Wert sein, bestimmt mittels Licht- oder Elektronenmikrokopie in Verbindung mit Bildauswertung.

Die Melamin/Formaldehyd-Kondensationsprodukte können neben Melamin 0 bis 50 Gew.-%, bevorzugt 0 bis 40 Gew.-%, besonders bevorzugt 0 bis 30 Gew.-%, insbesondere 0 bis 20 Gew.-% anderer Duroplastbildner und neben Formaldehyd 0 bis 50 Gew.-%, bevorzugt 0 bis 40 Gew.-%, besonders bevorzugt 0 bis 30 Gew.-%, insbesondere 0 bis 20 Gew.-% anderer Aldehyde einkondensiert enthalten. Bevorzugt sind unmodifizierte Melamin/Formaldehyd-Vorkondensate.

Als Duroplastbildner eignen sich beispielsweise alkyl- und arylsubstituiertes Melamin, Harnstoff, Urethane, Carbonsäureamide, Dicyandiamid, Guanidin, Sulfurylamid, Sulfonsäureamide, aliphatische Amine, Glykole, Phenol oder deren Derivate.

Als Aldehyde eignen sich beispielsweise Acetaldehyd, Trimethylolacetaldehyd, Acrolein, Benzaldehyd, Furfural, Glyoxal, Glutaraldehyd, Phthalaldehyd, Terephthalaldehyd oder deren Gemische. Weitere Einzelheiten über Melamin/Formaldehyd-Kondensationsprodukte finden sich in Houben-Weyl, Methoden der organischen Chemie, Band 14/2, 1963, Seiten 319 bis 402.

Die erfindungsgemäß eingesetzten Melamin-/Formaldehyd-Schaumstoffe lassen sich wie folgt herstellen:
Melamin-Formaldehyd-Vorkondensat und ein Lösungsmittel können mit einer Säure, einem Dispergiermittel, mit einem Treibmittel bei Temperaturen oberhalb der Siedetemperatur des Treibmittels verschäumt und anschließend getrocknet werden.

Als Melamin-/Formaldehyd-Vorkondensate eignen sich eigens hergestellte (siehe Übersichtsschriften: a) W. Woebcken, Kunststoffhandbuch 10. Duroplaste, München, Wien 1988, b) Encyclopedia of Polymer Science and Technology, 3. Aufl., Vol.1 , Kap. Amino Resins, S. 340 bis 370, 2003 c) Ullmann's Encyclopedia of Industrial Chemistry, 6. Aufl., Vol. 2, Kap. Amino Resins, S. 537 bis 565. Weinheim 2003) oder handelsübliche Vorkondensate der beiden Komponenten, Melamin und Formaldehyd. Die Melamin-Formaldehyd-Vorkondensate weisen in der Regel ein Molverhältnis von Formaldehyd zu Melamin 5 : 1 bis 1 ,3 : 1 , bevorzugt 3,5 : 1 bis 1,5 : 1 auf.

Eine bevorzugte Verfahrensvariante zur Herstellung des erfindungsgemäß eingesetzten Schaumstoffes umfasst die Stufen:
(1) Herstellen einer Suspension enthaltend ein Melamin/Formaldehyd-Vorkondensat des herzustellenden Schaumstoffs und gegebenenfalls weitere Zusatzkomponenten,
(2) Aufschäumen des Vorkondensates durch Erhitzen der Suspension aus Schritt (1) auf eine Temperatur oberhalb der Siedetemperatur des Treibmittels,
(3) Trocknen des aus Schritt (2) erhaltenen Schaumstoffs.

Die einzelnen Verfahrensschritte und die verschiedenen Variationsmöglichkeiten sind in der WO 2012/059493 näher ausgeführt. Beispielsweise können bei der Herstellung des Melamin/Formaldehyd-Vorkondensates Alkohole mitverwendet werden.

Als Dispergiermittel beziehungsweise Emulgator können anionische, kationische und nichtionische Tenside sowie Mischungen davon eingesetzt werden. Diese Dispergiermittel beziehungsweise Emulgatoren können beispielsweise in Mengen von 0,2 bis 5 Gew.-%, bezogen auf das Melamin/Formaldehyd-Vorkondensat, eingesetzt werden.

Zur Herstellung des Schaumstoffs können sowohl physikalische als auch chemische Treibmittel verwendet werden. Derartige Treibmittel sind ebenfalls in WO 2012/059493 beschrieben. Bevorzugt wird ein physikalisches Treibmittel mit einem Siedepunkt zwischen 0 und 80°C zugesetzt. Das Treibmittel liegt in der Mischung vorzugsweise in einer Menge von 0,5 bis 60 Gew.-%, besonders bevorzugt 1 bis 40 Gew.-%, insbesondere 1,5 bis 30 Gew.-% vor, bezogen auf das Melamin/Formaldehyd-Vorkondensat.

Auch Härter können mitverwendet werden. Dabei handelt es sich bevorzugt um saure (acide) Verbindungen, die die Weiterkondensation des Melaminharzes katalysieren.

Weitere Zusatzstoffe können, sofern gewünscht, in Mengen von 0,1 bis 20 Gew.-%, besonders bevorzugt 0,1 bis 10 Gew.-%, bezogen auf das Melamin/Formaldehyd-Vorkondensat, mitverwendet werden. Übliche Zusatzstoffe sind Farbstoffe, UV-Stabilisatoren, antibakterielle Additive und gegebenenfalls zusätzliche Flammschutzmittel oder Mittel zur Herabsetzung der Brandgastoxizität oder zur Förderung der Verkohlung. Auch Duftstoffe oder optische Aufheller oder Pigmente können zugesetzt werden. Diese Zusatzstoffe sind bevorzugt homogen in dem Schaumstoff verteilt. Eine Beschreibung befindet sich ebenfalls in WO 2012/059493.

Für einen guten Brandschutz sollte der Anteil an weiteren organischen Bestandteilen neben dem Melamin/Formaldehyd-Harz und der Polyurethandispersion in dem Schaumstoff möglichst gering sein.

Für konkrete Herstellungsbeispiele und Herstellungsbedingungen kann wiederum auf WO 2007/023118 und auf WO 2012/059493 verwiesen werden.

Die Imprägnierung mit dem mindestens einem mit Aminosilan oberflächenmodifiziertes teilchenförmiges Schichtsilikat und mindestens einer Polyurethandispersion, die anionisch und/oder nichtionisch stabilisiert ist sowie gegebenenfalls dem Dispergierhilfsmittel und dem Hydrophobierungs- / Oleophobierungsmittel kann nach beliebigem geeigneten Verfahren erfolgen. Geeignete Verfahren sind beispielsweise in WO 2007/023118 beschrieben.

Bevorzugt erfolgt die Herstellung durch ein Verfahren umfassend die folgenden Schritte:
(a) Mischen des mindestens einen mit Aminosilan oberflächenmodifiziertes teilchenförmiges Schichtsilikats mit der mindestens einen Polyurethandispersion, die anionisch und/oder nichtionisch stabilisiert ist, sowie gegebenenfalls dem Dispergierhilfsmittel und dem Hydrophobierungs- / Oleophobierungsmittel
(b) Aufbringen der Mischung aus Schritt (a) auf den Schaumstoff,
(c) gegebenenfalls nachfolgendes Pressen des Schaumstoffes, um die Mischung in die Poren des Schaumstoffs einzubringen,
(d) Trocknen des Schaumstoffes.

Dabei wird Schritt (d) vorzugsweise bei Temperaturen im Bereich von 40 bis 200°C, besonders bevorzugt 100 bis 150°C bis zur Gewichtskonstanz durchgeführt, je nach chemischer Struktur und Temperaturstabilität der PU-Dispersion.

Das Aufbringen der Mischung auf den Schaumstoff kann durch Auftragen auf den Schaumstoff, Tränken des Schaumstoffes mit der Mischung oder durch Nadelinjektion erfolgen.

Durch ein nachfolgendes Pressen des Schaumstoffes mit der Mischung, kann die Mischung in die Poren des Schaumstoffes eingebracht werden.

Zudem kann durch das Pressen oder Foulardieren eine gleichmäßige Verteilung der Mischung in den Poren des Schaumstoffes erreicht werden.

Das Auftragen der Mischung auf den Schaumstoff und das Pressen des Schaumstoffes können zum Beispiel wie in EP-A 0 451 535 beschrieben, durchgeführt werden. Hierzu wird der Schaumstoff zwischen zwei sich in entgegengesetzter Richtung drehende Walzen hindurchgeführt, wobei der Abstand der Walzen so gewählt ist, dass der Schaumstoff hierbei zusammengepresst wird. Die Mischung, mit der der Schaumstoff imprägniert wird, wird auf die horizontalen nebeneinander liegenden Walzen aufgegeben, so dass sich an der Stelle, an der der Schaumstoff durch die Walzen hindurchbewegt wird, ein Flüssigkeitspool ausbildet. Durch die Rotationsbewegung der Walzen und das Pressen des Schaumstoffes wird die Mischung, die im Flüssigkeitspool enthalten ist, in den Schaumstoff eingepresst. Die Mischung legt sich um die Stege des Schaumstoffes und bildet so nach dem Aushärten eine geschlossene Oberfläche.

Nach dem Aufbringen der Mischung und dem Pressen des Schaumstoffes wird der so imprägnierte Schaumstoff vorzugsweise in einem Trocknungsofen bei einer Temperatur im Bereich von 40 bis 200°C getrocknet.

Um die Dichte des imprägnierten Schaumstoffes weiter zu erhöhen, kann der in einer ersten Stufe imprägnierte Schaumstoff nach dem gleichen Verfahren auch mehrere Male das Verfahren zur Imprägnierung durchlaufen. Hierdurch wird in jedem Schritt die Dicke der die Stege umhüllenden Schicht und damit die Dichte erhöht.

Vorzugsweise weist der nicht imprägnierte Melamin/Formaldehyd-Schaumstoff eine Dichte im Bereich von 5 bis 12 g/l auf.

Bevorzugt ist, dass die Dichte des imprägnierten (und getrockneten) Melamin/Formaldehyd-Schaumstoffs um mindestens 3 g/l höher liegt als die Dichte des nicht imprägnierten Melamin/Formaldehyd-Schaumstoffs.

Neben dem Auftragen der Substanz, mit der der Schaumstoff imprägniert werden soll und dem anschließenden Pressen ist es ebenso möglich, den Schaumstoff mit der Substanz, mit der dieser imprägniert werden soll, zu tränken und anschließend zu pressen. Zum Tränken wird der Schaumstoff zum Beispiel durch ein Bad, welches die mindestens eine Substanz enthält, mit der der Schaumstoff imprägniert werden soll, gezogen. Es ist jedoch auch jedes weitere, dem Fachmann bekannte Verfahren denkbar, mit dem der Schaumstoff getränkt werden kann.

Eine weitere Möglichkeit zum Einbringen der Mischung in den Melamin/Formaldehyd-Schaumstoff ist das Injektionsverfahren. Dabei wird die Mischung durch mehrere Injektionsnadeln, die senkrecht zu einer Fläche parallel zueinander angeordnet sind, gleichmäßig geführt, und in den Schaumstoff eingetragen, so dass möglichst eine homogene Verteilung der Mischung in allen Raumrichtungen des Schaumstoffs resultiert. Das überschüssige Wasser kann beispielsweise durch das Durchführen durch einen Spalt zwischen zwei gegensinnig rotierenden Walzen entfernt werden.

Neben dem Durchführen des Schaumstoffes durch einen Spalt zwischen zwei gegensinnig rotierenden Walzen ist es auch möglich, den zum Imprägnieren notwendigen Druck dadurch auszuüben, dass der imprägnierte Schaumstoff auf einem Förderband transportiert wird und eine Walze, die sich mit der gleichen Umfangsgeschwindigkeit dreht, mit der der Schaumstoff bewegt wird, auf den Schaumstoff gepresst wird. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

Die erfindungsgemäßen Melamin/Formaldehyd-Schaumstoffe werden zur Wärme- und Schalldämmung im Bauwesen, im Automobil-, Schiffs- und Schienenfahrzeugbau, dem Bau von Raumfahrzeugen oder in der Polsterindustrie verwendet.

Die erfindungsgemäßen Melamin/Formaldehyd-Schaumstoffe finden bevorzugt Anwendung als Wärme-, Kälte- und/oder Schallschutz bzw. Dämmung bzw. Isolierung von Gebäuden und Gebäudeteilen, insbesondere von Wänden, Zwischenwänden, Dächern, Fassaden, Türen, Decken und Fußböden, von Fahrzeugen aller Art zu Land, zu Wasser, in der Luft und im All, sei es zur Lasten- oder zur Personenbeförderung oder einer derartigen Kombination in Personenkraftwagen, Lastkraftwagen, z.B. zur Isolierung des Motorraumes (wie Motorhauben) oder Fahrgastzellen, beim Schienenverkehr in den Waggons im Güter oder Personenverkehr sowie in Lokomotiven, in Luftfahrzeugen, z.B. im Kabineninnenraum, dem Cockpit oder im Frachtraum sowie in der Raumfahrt in bemannten oder unbemannten Flugobjekten, wie Raumschiffen und Raumgleitern, Raumkapseln oder Satelliten, zur Tieftemperaturisolierung, z.B. von Kühlaggregaten, Kühlschränken, Kühlhäusern, Tankanlagen und Behältern für beliebige Flüssigkeiten, insbesondere für Öl und Gas, bzw. Flüssiggas zur Lagerung und im Transport.

Erfindungsgemäße Schaumstoffe eignen sich insbesondere im Schiffbau zur Isolation von Wand- und Deckenelementen, Rohrleitungen und Klimakanälen.

Erfindungsgemäße Schaumstoffe eignen sich auch zur Herstellung von Bauteilen, welche die Anforderungen der Nichtbrennbarkeit gemäß IMO 2010 FTP Code Teil 1 erfüllen. Durch ein- oder beidseitige Kaschierung mit nichtbrennbaren Abdeckungen, wie z.B. aus Metall, Carbonfaser- oder Glasfaservliesen- und -geweben, sind thermoakustische Wand- oder Deckenelemente und auch Sandwich-Bauteile mit geringer Dichte zugänglich.

Die Erfindung wird durch die nachstehenden Beispiele näher erläutert.

### Beispiele

Verwendete Normen und Messverfahren:
Nichtbrennbarkeitsprüfung IMO-2010 FTP Code Teil 1 Dieser Brandtest dient zum Nachweis der Nichtbrennbarkeit von Materialien für Anwendungen im Bereich Schiffsbau gemäß Resolution MSC.307(88)). Dabei werden zylindrisch geformte Prüfkörper (H = 50 mm, Ø 45 mm) in einem elektrisch beheizten Ofen nach DIN EN ISO 1182 auf 750°C aufgeheizt. Die Prüfkörper werden als "nichtbrennbar" klassifiziert, wenn die durchschnittliche Temperaturdifferenz der Ofentemperatur und die durchschnittliche Temperaturdifferenz der Oberflächentemperatur des Prüfkörpers 30°C nicht übersteigt. Der gemittelte Masseverlust darf maximal 50 Gew.-% betragen und der Mittelwert der Entflammungsdauer kleiner als 10 Sekunden ausfällt.

### Bewertung der Anhaftung der Schichtsilikate am Melamin/Formaldehyd-Schaumstoff

Zur Beurteilung der Anhaftung des teilchenförmigen Schichtsilikats am Melamin/Formaldehyd-Schaumstoff wird ein zylindrischer Probekörper aus dem Melamin/Formaldehyd-Schaumstoff hergestellt, der einen Durchmesser von 45 mm und eine Höhe von 50 mm aufweist. Nach dem Aufbringen des Schichtsilikats auf das Schaumstoffgerüst und dem Trocknen wird der zylindrische Prüfkörper manuell auf eine dunkle, feste Unterlage gestoßen, ohne den Schaumstoff zu zerbrechen. Ein Herauslösen des Füllstoffs (Schichtsilikats) aus dem Schaumstoff wird durch einen pulverförmigen Belag auf der harten Oberfläche gezeigt.

### Bewertung der Wasseraufnahme in Anlehnung an DIN EN 1609

Die Norm DIN EN 13162 definiert die Wasseraufnahme Wₚ bei kurzzeitigem teilweisem Eintauchen gemäß EN 1609. Dabei darf das Prüfergebnis eine Wasseraufnahme von 1,0 kg/m² nicht überschreiten. Nach dem Abtropfverfahren gemäß EN 1609 wird die Ausgangsmasse mo des Probekörpers des hydrophobierten erfindungsgemäßen Schaumstoffs ermittelt. Anschließend wird der Probekörper in einen leeren Wasserbehälter gelegt und so belastet, dass er bei der Zugabe von Wasser teilweise eingetaucht bleibt. Dann wird vorsichtig Wasser in den Behälter zugegeben, bis die Unterseite des Probekörpers 10 mm unter dem Wasserspiegel liegt. Nach 24 h wird der Probekörper herausgenommen. Nach einer Abtropfzeit von 10 min wird der Probekörper wieder gewogen und die Masse m₂₄ bestimmt. Die Wasseraufnahme Wₚ in Kilogramm je Quadratmeter berechnet sich aus der Differenz von m₂₄ und mo geteilt durch die untere Begrenzungsfläche des Probekörpers Aₚ in Quadratmeter.

### Bewertung der Wärmeleitfähigkeit gemäß DIN EN 12667

Die Messung der Wärmeleitfähigkeit erfolgte gemäß DIN EN 12667 "Wärmetechnisches Verhalten von Bausstoffen und Bauprodukten; Bestimmung des Durchlasswiderstandes nach dem Verfahren mit dem Plattengerät und dem Wärmestrommessplatten-Gerät; Produkte mit hohem und mittlerem Wärmedurchlasswiderstand".

Sauerstoffindex gemäß ISO 4589-2

Der Sauerstoffindex (LOI = Limiting Oxygen Index) ist eine Kenngröße zur Beschreibung des Brandverhaltens vor allem von Kunststoffen. Es ist die minimale Sauerstoffkonzentration eines Sauerstoff-Stickstoff-Gemisches, bei der die Verbrennung eines vertikal angeordneten Prüfkörpers unter den Prüfbedingungen anhält. Ein Stoff brennt umso besser, je niedriger sein Sauerstoffindex ist.

Die folgenden Inhaltsstoffe wurden in den nachfolgenden Beispielen und Vergleichsbeispielen eingesetzt:
Allgemeine Herstellvorschrift:
Ein Melamin/Formaldehyd-Schaumstoff wurde wie in WO 2012/059493, Vergleichsbeispiel A beziehungsweise gemäß WO 2009/021963 hergestellt. Ein entsprechender Schaumstoff ist beispielsweise unter der Bezeichnung Basotect® von BASF SE erhältlich.

### Aufbringen der Imprägnierung

Die Imprägnierung erfolgte durch Eintauchen eines flächigen Zuschnitts eines Melamin/Formaldehyd-Schaumstoffs in eine Dispersion besteht aus Schichtsilikat, Dispergierhilfsmittel, Polyurethandispersion und Wasser. Nach mehrfacher Komprimierung des Schaumstoffs in der Dispersion wurde dieser aus der Dispersion genommen und anschließend bei 130°C für ca. 4 h bis zur Gewichtskonstanz getrocknet.

Dabei wurde ein mit Aminosilan oberflächenmodifiziertes teilchenförmiges Schichtsilikat mit einem mittleren Teilchendurchmesser (auf die Länge bezogen), von 1,4 µm eingesetzt. Es wurde das von BASF SE erhältliche Produkt Translink® 445 verwendet. Als Dispergierhilfsmittel wurde Talkum mit einer mittleren Teilchengröße (auf die Länge bezogen) von 10 µm mitverwendet. Als Melamin/Formaldehyd-Schaumstoff wurde zudem Basotect® UL von BASF SE eingesetzt.

Als anionisch und/oder nichtionisch stabilisierte Polyurethandispersion wurden unterschiedliche, in der nachstehenden Tabelle aufgeführte Dispersionen eingesetzt. Astacin® Finish PUM TF und Astacin® Finish PUMN TF von BASF SE sind anionische Polyurethan-Dispersion, die üblicherweise in der Lederveredlung eingesetzt werden. Die Klebrohstoffe Emuldur® 381 A (40%) und Emuldur® 360 A (40%) von BASF SE sind ebenfalls anionische Polyurethan-Dispersionen. Die anionisch aliphatische Polyurethan-Dispersion Impranil® DLV/1 (40%) von Covestro wird üblicherweise zur Herstellung von Textilbeschichtungen in verschiedenen Anwendungsbereichen verwendet. Die entsprechenden Zusammensetzungen sind in der nachstehenden Tabelle 1 wiedergegeben.

**Tabelle 1**

| | 1 | 2 | 3 | 4 | 5 |
|---|---|---|---|---|---|
| Einsatzstoffe (g) | | | | | |
| Translink® 445 | 2,50 | 2,50 | 2,50 | 2,50 | 2,50 |
| Talkum Talc 10µm | 0,25 | 0,25 | 0,25 | 0,25 | 0,25 g |
| Astacin® Finish PUM TF (40%) | 0,25 | | | | |
| Astacin® Finish PUMN TF (37%) | | 0,27 | | | |
| Emuldur® 381 A (40%) | | | 0,25 | | |
| Emuldur® 360 A (40%) | | | | 0,25 | |
| Impranil® DLV/1 (40%) | | | | | 0,25 |
| Wasser | 100,00 | 100,00 | 100,00 | 100,00 | 100,00 |
| Basotect® UL (6 ± 2 g/L) | 0,48 | 0,47 | 0,48 | 0,48 | 0,48 |
| | | | | | |
| Ergebnis nach Imprägnierung | | | | | |
| Masse (g) | 2,2 | 2,0 | 2,0 | 2,2 | 2,1 |
| Dichte (g/L) | 27,4 | 25,4 | 25,4 | 27,4 | 26,4 |

In sämtlichen Versuchen wurde eine Verbesserung der Anhaftung im Vergleich zu Systemen ohne Binder beobachtet. Diese war für die Beispiele 1 und 4 sehr gut, für Beispiel 5 gut und für die Beispiele 2 und 3 mäßig.

In einer weiteren Ausführungsform wurden erfindungsgemäße Schaumstoffe mittels Imprägnierung von flächigen Zuschnitten eines Melamin/Formaldehyd-Schaumstoffs in einer Dicke von 50 mm mit einer Dispersion bestehend aus Schichtsilikat, Dispergierhilfsmittel, Polyurethandispersion und Wasser und anschließendem Durchführen durch einen Spalt zwischen zwei gegensinnig rotierenden Walzen (Foulard, Type Mathis HVF 5) sowie daran anschließendem Trocknen bei 130°C bis zur Gewichtskonstanz erhalten. Die Ergebnisse sind in der nachfolgenden Tabelle 2 zusammengestellt.

**Tabelle 2**

| | 6 | 7 | 8 | 9 | 10 |
|---|---|---|---|---|---|
| Einsatzstoffe (g) | | | | | |
| Translink® 445 | 62,50 | 62,50 | 62,50 | 62,50 | 62,50 |
| Talkum Talc 10µm | 6,25 | 6,25 | 6,25 | 6,25 | 6,25 |
| Emuldur® 360 A (40%) | 2,50 | 4,46 | 6,25 | 8,03 | 6,25 |
| Wasser | 2500,00 | 2500,00 | 2500,00 | 2500,00 | 2500,00 |
| Basotect® UL (6 g/L) | 5,67 | 5,67 | 5,71 | 5,65 | 5,72 |
| | | | | | |

| Ergebnis nach Imprägnierung | | | | | |
|---|---|---|---|---|---|
| Masse (g) | 19,1 | 19,3 | 19,2 | 19,5 | 14,9 |
| Dichte (g/L) | 20,2 | 20,4 | 20,3 | 20,6 | 15,7 |
| | | | | | |

| Bewertung | | | | | |
|---|---|---|---|---|---|
| Anhaftung der Schichtsilikate Nichtbrennbarkeitsprüfung (IMO 2010 FTP Code Teil 1) | befriedigend bestanden | gut bestanden | sehr gut bestanden | sehr gut nicht bestanden | sehr gut nicht bestanden |

Formulierung 8 zeigt eine sehr gute Anbindung des Schichtsilikats und des Dispergierhilfsmittel im Schaumstoff und die Anforderungen der Nichtbrennbarkeitsprüfung gemäß IMO 2010 FTP Code Teil 1 wurden erfüllt.

In einer weiteren Ausführungsform wurden erfindungsgemäße Schaumstoffe mittels Imprägnierung von flächigen Zuschnitten eines Melamin/Formaldehyd-Schaumstoffs in einer Dicke von 50 mm mit einer Dispersion bestehend aus Schichtsilikat, Polyurethandispersion, Hydrophobierungsmittel und Wasser und anschließendem Durchführen durch einen Spalt zwischen zwei gegensinnig rotierenden Walzen (Foulard, Type Mathis HVF 5) sowie daran anschließendem Trocknen bei 130°C bis zur Gewichtskonstanz erhalten und anschließend bei 170°C für 30 min nachgetrocknet. Als Hydrophobierungsmittel wurde Tegosivin HE 328 von Evonik eingesetzt. Die Ergebnisse sind in der nachfolgenden Tabelle 3 zusammengestellt.

| | 11 |
|---|---|
| Einsatzstoffe (g) | |
| Translink® 445 | 118,75 |
| Tegosivin HE 328 | 1,25 |
| Emuldur® 360 A (40%) | 5,00 |
| Wasser | 2500,00 |
| Basotect® UL (6 g/L) | 6,16 |
| | |

| Ergebnis nach Imprägnierung | |
|---|---|
| Masse (g) | 21,7 |
| Dichte (g/L) | 21,2 |

| Bewertung | |
|---|---|
| Anhaftung der Schichtsilikate Nichtbrennbarkeitsprüfung (IMO 2010 FTP Code Teil 1) | gut bestanden |
| Wasseraufnahme (in Anlehnung an DIN EN 1609) | bestanden |
| Wärmeleitfähigkeit (mW/m*K, DIN EN 12667) | 32,1 |

Flächige Zuschnitte von Formulierung 11 wurden im Anschluss mit einem Glasvlies (80 kg/m²) kaschiert. Hierzu wurde der Brandschutzkleber 10300 von IGP GmbH mit Wasser 1:1 verdünnt und mittels einer Sprühpistole auf die Oberseite der Probenkörperplatten aus Formulierung 11 homogen appliziert. Anschließend wurde auf die noch nasse Oberfläche das Glasvlies gelegt und mit einem Gewicht beschwert, ohne den Schaumstoff zu stark zu komprimieren. Bei Raumtemperatur wurde bis zur Gewichtskonstanz getrocknet. Mit einer Auftragsmenge (Trockengewicht) des Brandschutzklebers 10300 von 400 g/m² konnte eine gute homogene Anhaftung des Glasvlieses an die Oberfläche des Schaumstoffs von Formulierung 11 erzielt werden. Das so kaschierte Bauteil 12 wurde hinsichtlich der Brandeigenschaften und der thermischen Leitfähigkeit untersucht. Die Anforderungen gemäß IMO 2010 FTP Code Teil 1 wurden erfüllt. Die Wärmleitfähigkeit gemäß DIN EN 12667 beträgt 32,4 mW/m*K.

Auf ähnliche Weise wurden flächige Zuschnitte von Formulierung 11 beidseitig mit perforierter Aluminiumfolie (Flächengewicht 60 g/m², 16 Loch/cm²) kaschiert. Hierzu wurde Emuldur 360 A der Fa. BASF mit Wasser verdünnt und mittels einer Sprühpistole auf die Ober- und Unterseite der Probenkörperplatten aus Formulierung 11 homogen appliziert. Anschließend wurde auf die noch nasse Oberfläche die Aluminiumfolie gelegt und mit einem geringen Gewicht beschwert, ohne den Schaumstoff zu stark zu komprimieren. Bei Raumtemperatur wurde bis zur Gewichtskonstanz getrocknet. Mit einer Auftragsmenge (Trockengewicht) des Binders Emuldur 360 A von 35 g/m² konnte eine sehr gute homogene Anhaftung der Aluminiumfolie an die Oberfläche des Schaumstoffs von Formulierung 11 erzielt werden. Die Anforderungen gemäß IMO 2010 FTP Code Teil 1 wurden erfüllt.

In ähnlicher Weise wurden auch Muster mit den Bindern Hensotherm, 2KS der Fa. Rudolf Hensel GmbH und dem Brandschutzkleber VP 7470/2 der Fa. IGP Chemie GmbH und beidseitiger Aluminium-Kaschierung hergestellt. Hensotherm, 2KS wurde mit Wasser 1:1 verdünnt, auf das Basotect aufgesprüht, anschließend wurde die Aluminiumfolie aufgelegt und es wurde bis zur Gewichtskonstanz getrocknet (Trockengewicht des Binders 40 g/m²). Im Falle des Brandschutzklebers VP 7470/2 wurde dieser mit Wasser verdünnt und mit einem Pinsel auf die Aluminiumfolie aufgetragen. Die Folie wurde auf Basotect aufgelegt und unter leichtem Druck bis zur Gewichtskonstanz getrocknet (Trockengewicht des Binders 130 g/m²). In beiden Fällen konnte eine gute homogene Anhaftung der Aluminiumfolie an die Oberfläche des Schaumstoffs erzielt werden.

BSK 10300 ist ein lösemittelfreier, nichtbrennbarer Einkomponenten-Wasserglaskleber. Der A1-Kleber gemäß DIN 4102-1 besteht aus einer Zubereitung von wässerigen Alkalisilikaten mit Zusätzen von anorganischen Füllstoffen sowie Additiven zur Verbesserung der rheologischen Eigenschaften und des Separationsverhaltens.

VP7470/2 ist ein lösemittelfreies einkomponentiges Produkt, welches im vorbeugenden Brandschutz als Brandschutzkleber/-beschichtung für verschiedene Materialien eingesetzt werden kann. VP7470/2 besteht aus einer wässirigen Kunststoffdispersion mit anorganischen Zusätzen und Wasser abspaltenden (halogenfreien) Flammschutzmitteln.

Hensotherm 2 KS Innen ist eine dämmschichtbildende Holz-Brandschutzbeschichtung, welches die Einstufung von Holz und Holzwerkstoffen in die Baustoffklasse B1 gemäß DIN 4102-1 ermöglicht.

In einer weiteren Untersuchungsreihe wurde der Einfluss des Klebesystems auf das Brandverhalten untersucht. Hierzu wurden drei unterschiedliche Systeme auf Basis von Aluminiumfolie, Basotect und Bindesystem hergestellt, und anschließend wurde der Sauerstoffindex gemäß ISO 4589-2 ermittelt.
a) Die Oberseite einer Basotect-Platte wurde mit selbstklebender Aluminiumfolie kaschiert (Stärke 0,08 mm einseitig beschichtet mit Haftkleber). Die Rückseite wurde mit einer doppelseitigen Klebefolie auf Basis von Acrylatkleber ausgestattet. Die Schutzfolie der doppelseitigen Klebefolie wurde für den darauffolgenden Brandtest entfernt.
b) Die Oberseite einer Basotect-Platte wurde mit selbstklebender Aluminiumfolie kaschiert (Stärke 0,08mm einseitig beschichtet mit Haftkleber).
c) Die Oberseite einer Basotect-Platte wurde mit dem Brandschutzkleber 10300 (1:1 verdünnt mit Wasser) besprüht. Anschließend wurde auf die noch nasse Oberfläche die Aluminiumfolie (Stärke 0,08 mm ohne Haftkleber) gelegt und mit einem Gewicht beschwert ohne den Schaumstoff zu stark zu komprimieren. Mit einer Auftragsmenge (Trockengewicht) des Brandschutzklebers 10300 von 400 g/m² konnte eine gute homogene Anhaftung der Aluminiumfolie an die Oberfläche von Basotect erzielt werden.

Für die drei Einstellungen a) bis c) wurden folgende Sauerstoffindices gemäß ISO 4589-2 erhalten:
a) LOI: 20.2%
b) LOI: 27.0%
c) LOI: 30.4%

Durch Einsatz geeigneter Klebesysteme kann der Sauerstoffindex erhöht und damit die Neigung zum Verbrennen reduziert werden.

Zum Vergleich wurden Imprägnierungen auf Basis von Magnesiumoxid als teilchenförmigem Füllstoff in Kombination mit verschiedenen Bindemitteln untersucht.

MAGNIFIN® H-5 IV von Albemarle ist ein hochreines Magnesiumhydroxid, das einer speziellen chemischen Oberflächenbehandlung mit einem Aminopolysiloxan unterzogen wurde.

Die Bindemittel Acronal® Plus 2483 und Acronal® 5041 von BASF SE sind wässrige Dispersion eines Styrol-Acrylestercopolymeren. Die organofunktionalisierten Silane Geniosil® GF9 und Geniosil® GF95 von Wacker Chemie AG werden als Haftvermittler in mit Füllstoffen modifizierten Kunststoffen eingesetzt. Acrodur® 950 L von BASF SE ist eine wässrige Lösung einer modifizierten Polycarbonsäure mit einem mehrwertigen Alkohol als Vernetzungskomponente und dient zur formaldehydfreien Bindung von Holzfasern, anderen Naturfasern oder feinteiligen anorganischen Materialien. Lupamin® 9050 von BASF SE ist ein Copolymer von Vinylformamid und Vinylamin. Der Brandschutzkleber BSK 10300 von IGP GmbH besteht aus einer Zubereitung von wässerigen Alkalisilikaten mit Zusätzen von anorganischen Füllstoffen sowie Additiven zur Verbesserung der rheologischen Eigenschaften und des Separationsverhaltens.

Entsprechende Zusammensetzungen sind in der nachstehenden Tabelle 3 angegebenTabelle 3

| | V1 | V2 | V3 | V4 | V5 | V6 | V7 | V8 |
|---|---|---|---|---|---|---|---|---|
| Einsatzstoffe (g) | | | | | | | | |
| Magnifin® H-5 IV | 2,50 | 2,50 | 2,50 | 2,50 | 2,50 | 2,50 | 2,50 | 2,50 |
| Acronal® Plus 2483 (50%) | 0,30 | | | | | | | |
| Acronal® 5041 (52%) | | 0,30 | | | | | | |
| Geniosil® GF9 | | | 0,30 | | | | | |
| Geniosil® GF95 | | | | 0,30 | | | | |
| Emuldur® 360 A (40%) | | | | | 0,30 | | | |
| Acrodur® 950 L (50%) | | | | | | 0,30 | | |
| Lupamin® 9050 (18%) | | | | | | | 0,30 | |
| Brandschutzkleber | | | | | | | | |
| BSK10300 (66%) | | | | | | | | 0,30 |
| Wasser | 100,00 | 100,00 | 100,00 | 100,00 | 100,00 | 100,00 | 100,00 | 100,00 |
| Basotect® UL (6 ± 2 g/L) | 0,49 | 0,49 | 0,48 | 0,48 | 0,49 | 0,49 | 0,50 | 0,48 |
| | | | | | | | | |

| Ergebnis nach Imprägnierung | | | | | | | | |
|---|---|---|---|---|---|---|---|---|
| Masse (g) | 2,8 | 2,9 | 2,5 | 2,2 | 2,9 | 2,9 | 2,7 | 2,9 |
| Dichte (g/L) | 34,6 | 34,9 | 31,3 | 26,9 | 35,0 | 34,8 | 33,1 | 35,4 |

Die imprägnierten Schaumstoffe der Vergleichsbeispiele wiesen eine schlechte Anbindung des Füllstoffs Magnesiumoxid auf. Der Füllstoff rieselte nahezu vollständig aus dem Schaumstoff heraus bei der vorstehend beschriebenen mechanischen Testung.

## Patentansprüche

1. Melamin/Formaldehyd-Schaumstoff mit offenzelligem Schaumstoffgerüst, mit einer auf das Schaumstoffgerüst aufgebrachten Imprägnierung, die mindestens ein mit Aminosilan oberflächenmodifiziertes teilchenförmiges Schichtsilikat und mindestens eine Polyurethandispersion, die anionisch und/oder nichtionisch stabilisiert ist, enthält, wobei die durch die Imprägnierung aufgebrachten Substanzen getrocknet sein können.

2. Schaumstoff nach Anspruch 1, **dadurch gekennzeichnet, dass** das mit Aminosilan oberflächenmodifiziertes teilchenförmiges Schichtsilikat einen mittleren Teilchendurchmesser im Bereich von 0,2 bis 10 µm (Z-Mittel, bestimmt mittels Lichtstreuung, Malvern, Fraunhoferbeugung) aufweist.

3. Schaumstoff nach Anspruch 1 oder 2, **dadurch gekennzeichnet, dass** das mindestens eine mit Aminosilan oberflächenmodifizierte teilchenförmige Schichtsilikat in einer Menge von 50 bis 350 Gewichtsteilen, bezogen auf 100 Gewichtsteile nicht imprägnierten Melamin/Formaldehyd-Schaumstoff, auf das Schaumstoffgerüst aufgebracht ist.

4. Schaumstoff nach einem der Ansprüche 1 bis 3, **dadurch gekennzeichnet, dass** die mindestens eine Polyurethandispersion, die anionisch und/oder nichtionisch stabilisiert ist, in einer Menge von 0,5 bis 10 Gew.-%, bezogen auf die Trockenmasse der Imprägnierung, eingesetzt wird.

5. Schaumstoff nach einem der Ansprüche 1 bis 4, **dadurch gekennzeichnet, dass** der nicht imprägnierte Melamin/Formaldehyd-Schaumstoff eine Dichte im Bereich von 5 bis 12 g/l aufweist.

6. Schaumstoff nach einem der Ansprüche 1 bis 5, **dadurch gekennzeichnet, dass** die Dichte des imprägnierten Melamin/Formaldehyd-Schaumstoffs um mindestens 3 g/l höher liegt als die Dichte des nicht imprägnierten Melamin/Formaldehyd-Schaumstoffs.

7. Schaumstoff nach einem der Ansprüche 1 bis 6, **dadurch gekennzeichnet, dass** der Melamin/Formaldehyd-Schaumstoff ein Molverhältnis von Formaldehyd zu Melamin im Bereich von 5 : 1 bis 1,3 : 1 aufweist.

8. Schaumstoff nach einem der Ansprüche 1 bis 7, **dadurch gekennzeichnet, dass** die mindestens eine Polyurethandispersion, die anionisch und/oder nichtionisch stabilisiert ist, eine wässrige Dispersion eines Carbodiimid-Struktureinheiten der Formel -N=C=N- aufweisenden Polyurethans ist.

9. Schaumstoff nach Anspruch 8, **dadurch gekennzeichnet, dass** die Carbodiimid-Struktureinheiten der Formel -N=C=N- über Tetramethylxylylendiisocyanat (TMXDI) in das Polyurethan eingeführt sind.

10. Schaumstoff nach Anspruch 8 oder 9, **dadurch gekennzeichnet, dass** der Gehalt an Carbodiimid-Struktureinheiten der Formel -N=C=N-, bezogen auf das Polyurethan, 5 bis 200 mmol/kg beträgt.

11. Schaumstoff nach einem der Ansprüche 1 bis 10, **dadurch gekennzeichnet, dass** die Imprägnierung zusätzlich Hydrophobierungs- und/oder Oleophobierungsmittel und/oder Dispergierhilfsmittel enthält.

12. Schaumstoff nach einem der Ansprüche 1 bis 11, **dadurch gekennzeichnet, dass** seine äußere Oberfläche zumindest teilweise mit Glasfaservliesen, Mineralfaservliesen, Carbonfaservliesen, Glasfasergeweben, Mineralfasergeweben, Carbonfasergeweben oder Metallfolien kaschiert ist.

13. Verfahren zur Herstellung eines Melamin/Formaldehyd-Schaumstoffs nach einem der Ansprüche 1 bis 11, umfassend die Schritte:
(a) Mischen des mindestens einen mit Aminosilan oberflächenmodifiziertes teilchenförmiges Schichtsilikats mit der mindestens einen Polyurethandispersion, die anionisch und/oder nichtionisch stabilisiert ist, sowie gegebenenfalls dem Dispergierhilfsmittel und dem Hydrophobierungs-/Oleophobierungsmittel,
(b) Aufbringen der Mischung aus Schritt (a) auf den Schaumstoff,
(c) gegebenenfalls nachfolgendes Pressen des Schaumstoffes, um die Mischung in die Poren des Schaumstoffs einzubringen,
(d) Trocknen des Schaumstoffes.

14. Verfahren nach Anspruch 12, **dadurch gekennzeichnet, dass** Schritt (d) bei Temperaturen im Bereich von 40 bis 200°C durchgeführt wird.

15. Verwendung der Melamin/Formaldehyd-Schaumstoffe nach einem der Ansprüche 1 bis 11 zur Wärme- und Schalldämmung im Bauwesen, im Automobil-, Schiffs- und Maschinen-, Luft- und Raumfahrzeugbau.

## Claims

1. A melamine/formaldehyde foam having an open-cell foam structure, with an impregnation applied to the foam structure that comprises at least one particulate phyllosilicate surface-modified with aminosilane and at least one anionically- and/or nonionically-stabilized polyurethane dispersion, wherein the substances applied by the impregnation may be dried.

2. The foam according to claim 1, wherein the particulate phyllosilicate surface-modified with aminosilane has a mean particle diameter in the range from 0.2 to 10 µm (Z mean, determined by light scattering, Malvern, Fraunhofer diffraction).

3. The foam according to claim 1 or 2, wherein the at least one particulate phyllosilicate surface-modified with aminosilane is applied to the foam structure in an amount of 50 to 350 parts by weight based on 100 parts by weight of unimpregnated melamine/formaldehyde foam.

4. The foam according to any of claims 1 to 3, wherein the at least one anionically- and/or nonionically-stabilized polyurethane dispersion is used in an amount of 0.5% to 10% by weight based on the impregnation dry mass.

5. The foam according to any of claims 1 to 4, wherein the unimpregnated melamine/formaldehyde foam has a density in the range from 5 to 12 g/l.

6. The foam according to any of claims 1 to 5, wherein the density of the impregnated melamine/formaldehyde foam is at least 3 g/l higher than the density of the unimpregnated melamine/formaldehyde foam.

7. The foam according to any of claims 1 to 6, wherein the melamine/formaldehyde foam has a molar ratio of formaldehyde to melamine in the range from 5:1 to 1.3:1.

8. The foam according to any of claims 1 to 7, wherein the at least one anionically- and/or nonionically-stabilized polyurethane dispersion is an aqueous dispersion of a polyurethane comprising carbodiimide structural units of the formula -N=C=N-.

9. The foam according to claim 8, wherein the carbodiimide structural units of the formula - N=C=N- are introduced into the polyurethane via tetramethylxylylene diisocyanate (TMXDI).

10. The foam according to claim 8 or 9, wherein the content of carbodiimide structural units of the formula -N=C=N- is 5 to 200 mmol/kg based on the polyurethane.

11. The foam according to any of claims 1 to 10, wherein the impregnation additionally comprises hydrophobizing and/or oleophobizing agents and/or dispersing agents.

12. The foam according to any of claims 1 to 11, wherein the outer surface thereof is at least partially laminated with glass-fiber nonwovens, mineral-fiber nonwovens, carbon-fiber nonwovens, glass-fiber woven fabrics, mineral-fiber woven fabrics, carbon-fiber woven fabrics or metal foils.

13. A process for producing a melamine/formaldehyde foam according to any of claims 1 to 11, comprising the steps of:
(a) mixing the at least one particulate phyllosilicate surface-modified with aminosilane with the at least one anionically- and/or nonionically-stabilized polyurethane dispersion and optionally the dispersing agent and the hydrophobizing/oleophobizing agent,
(b) applying the mixture from step (a) to the foam,
(c) optionally subsequently compressing the foam so as to introduce the mixture into the pores of the foam,
(d) drying the foam.

14. The process according to claim 12, wherein step (d) is carried out at temperatures in the range from 40 to 200°C.

15. The use of the melamine/formaldehyde foams according to any of claims 1 to 11 for thermal and sound insulation in the construction of buildings and in automobile, ship, machine, aircraft, and spacecraft construction.

## Revendications

1. Mousse de mélamine/formaldéhyde dotée d'une structure de mousse à alvéoles ouverts, dotée d'une imprégnation appliquée sur la structure de mousse, qui contient au moins un silicate stratifié particulaire modifié en surface avec un aminosilane et au moins une dispersion de polyuréthane qui est stabilisée de manière anionique et/ou non ionique, les substances appliquées par l'imprégnation pouvant être séchées.

2. Mousse selon la revendication 1, **caractérisée en ce que** le silicate stratifié particulaire modifié en surface avec un aminosilane présente un diamètre moyen de particule dans la plage de 0,2 à 10 µm (moyenne Z, déterminée au moyen de diffusion de lumière, Malvern, diffraction de Fraunhofer).

3. Mousse selon la revendication 1 ou 2, **caractérisée en ce que** l'au moins un silicate stratifié particulaire modifié en surface avec un aminosilane est appliqué sur la structure de mousse en une quantité de 50 à 350 parties en poids, par rapport à 100 parties en poids de mousse de mélamine/formaldéhyde non imprégnée.

4. Mousse selon l'une quelconque des revendications 1 à 3, **caractérisée en ce que** l'au moins une dispersion de polyuréthane, qui est stabilisée de manière anionique et/ou non ionique, est utilisée en une quantité de 0,5 à 10 % en poids, par rapport à la masse sèche de l'imprégnation.

5. Mousse selon l'une quelconque des revendications 1 à 4, **caractérisée en ce que** la mousse de mélamine/formaldéhyde non imprégnée présente une densité dans la plage de 5 à 12 g/l.

6. Mousse selon l'une quelconque des revendications 1 à 5, **caractérisée en ce que** la densité de la mousse de mélamine/formaldéhyde imprégnée est au moins 3 g/l plus élevée que la densité de la mousse de mélamine/formaldéhyde non imprégnée.

7. Mousse selon l'une quelconque des revendications 1 à 6, **caractérisée en ce que** la mousse de mélamine/formaldéhyde présente un rapport molaire de formaldéhyde sur mélamine dans la plage de 5 : 1 à 1,3 : 1.

8. Mousse selon l'une quelconque des revendications 1 à 7, **caractérisée en ce que** l'au moins une dispersion de polyuréthane, qui est stabilisée de manière anionique et/ou non ionique, est une dispersion aqueuse d'un polyuréthane présentant des motifs structuraux de type carbodiimide de formule -N=C=N-.

9. Mousse selon la revendication 8, **caractérisée en ce que** les motifs structuraux de type carbodiimide de formule -N=C=N- sont introduits dans le polyuréthane par l'intermédiaire de diisocyanate de tétraméthylxylylène (TMXDI).

10. Mousse selon la revendication 8 ou 9, **caractérisée en ce que** la teneur en motifs structuraux de type carbodiimide de formule -N=C=N-, par rapport au polyuréthane, est de 5 à 200 mmole/kg.

11. Mousse selon l'une quelconque des revendications 1 à 10, **caractérisée en ce que** l'imprégnation contient de plus des agents d'hydrophobisation et/ou des agents d'oléophobisation et/ou des auxiliaires de dispersion.

12. Mousse selon l'une quelconque des revendications 1 à 11, **caractérisée en ce que** sa surface extérieure est doublée au moins partiellement avec des non-tissés de fibres de verre, des non-tissés de fibres minérales, des non-tissés de fibres de carbone, des tissus de fibres de verre, des tissus de fibres minérales, des tissus de fibres de carbone ou des feuilles métalliques.

13. Procédé pour la préparation d'une mousse de mélamine/formaldéhyde selon l'une quelconque des revendications 1 à 11, comprenant les étapes de :
(a) mélange de l'au moins un silicate stratifié particulaire modifié en surface avec un aminosilane avec l'au moins une dispersion de polyuréthane, qui est stabilisée de manière anionique et/ou non ionique, ainsi qu'éventuellement avec l'auxiliaire de dispersion et l'agent d'hydrophobisation/l'agent d'oléophobisation,
(b) application du mélange de l'étape (a) sur la mousse,
(c) compression subséquente éventuelle de la mousse, afin d'introduire le mélange dans les pores de la mousse,
(d) séchage de la mousse.

14. Procédé selon la revendication 12, **caractérisé en ce que** l'étape (d) est mise en œuvre à des températures dans la plage de 40 à 200 °C.

15. Utilisation des mousses de mélamine/formaldéhyde selon l'une quelconque des revendications 1 à 11 pour l'isolation thermique et phonique dans la construction, dans la construction automobile, la construction navale et la construction de machines, la construction aéronautique et la construction spatiale.
